Europäisches Patentamt

European Patent Office

Office européen des brevets

(11) Publication number: **0 164 457**
**A1**

(12) **EUROPEAN PATENT APPLICATION**

(21) Application number: **84303730.0**

(22) Date of filing: **04.06.84**

(51) Int. Cl.⁴: **G 06 F 15/72**

(43) Date of publication of application:
**18.12.85 Bulletin 85/51**

(84) Designated Contracting States:
**BE DE FR IT NL SE**

(71) Applicant: **THE MARCONI COMPANY LIMITED**
**The Grove Warren Lane**
**Stanmore Middlesex HA7 4LY(GB)**

(72) Inventor: **Nesbitt, Norman Robert Sidney**
**12, Glovers Lane Balderton**
**Newark Nottinghamshire(GB)**

(72) Inventor: **Skeels, Edwin**
**6, Windermere Close Earl Shilton**
**Leicester, LE9 7GB(GB)**

(72) Inventor: **Rowley, Terence**
**4, Warwick Close**
**Market Bosworth Nuneaton(GB)**

(74) Representative: **Tolfree, Roger Keith**
**GEC p.l.c. Central Patent Department Chelmsford Office**
**Marconi Research Centre West Hanningfield Road**
**Great Baddow Chelmsford Essex CM2 8HN(GB)**

(54) **An image generator.**

(57) A trainee located in a simulated vehicle 4 views a screen 10 on which a moving colour picture is projected. The picture is composed of numerous picture elements whose shapes and colours are defined in a data base 1 and which are displayed on the screen in such a manner as to simulate movement and perspective effects under the control of the trainee and with constraints defined by the program of a games computer 5.

A number of stores 16-20 define different textures: mixtures of which can be applied to individual picture elements. For this purpose the data base 1 includes, in its definition of each picture element. the required texture mixture. This is represented by a code $T_1$ which operates selectors 21 and 26 to provide the required mixture. The data base also defines the required scale and intensity of the texture for each picture element, these being controlled by codes $T_2, T_3, T_4, T_5$ and $T_6$. It is thus possible to provide a wide variety of different texture effects enabling much improved realism to be achieved.

EP 0 164 457 A1

./...

FIG. IA.

FIG. IC.

FIG. IB.

AN IMAGE GENERATOR

This invention relates to an image generator and more particularly to a type of image generator in which a data store is used to define individual picture elements (e.g. surfaces) which fit together to form the shape of a feature to be depicted. In this type of image generator the data from the store is processed electronically and used to generate an image of the feature as viewed from any particular observer position.

One such known image generator is described in a paper "Texture and Reflection in Computer Generated Images" by James F. Blinn and Martin E. Newell published in "Communications of the ACM" October 1976 Volume 19 No.10 pages 542 to 547. This paper proposes various ways in which texture can be applied to the image of an object to be depicted, and illustrates an example of this in which a pattern is applied to the image of a teapot in such a way that the texture is distorted to allow for perspective and different angles of view. The technique described in the aforementioned paper can, because of the perspective effects achieved, enhance the realism of an image of an article having a regular repeated pattern over its surface. A limitation of the aforementioned technique is that it cannot improve the realism of scenes having a plurality of different textures. In order to improve the realism of such scenes in known image generators it is necessary to increase the content of the aforementioned data store so as to define a greater number of smaller surfaces. Another limitation of the known technique mentioned above is that it cannot be used to generate a satisfactory image of a scene where the effects of perspective require the pattern to be displayed on a very small scale: beyond the resolution of the display system.

This invention provides an image generator comprising a data store defining characteristics of picture elements of a scene to be simulated; a texture store defining a texture to be applied to at least some of the elements and a picture generating system for producing a visual representation of said elements with the said texture superimposed on them; characterised in that the texture store defines a plurality of different textures; in that the data store contains, for each picture element, a texture code identifying at least one texture and in that the picture generating system is such as to produce an image of each picture element carrying a texture or textures as defined by the texture code for that element.

The application of different textures or combinations of textures to different picture elements in accordance with the invention enables a considerable improvement in picture realism to be obtained using considerably less information storage space than would be required to achieve similar improvement using conventional techniques. Furthermore, by combining two or more texture patterns, each containing distinct spacial frequencies so that one pattern represents a fine texture and the second a coarser texture and by independently controlling the amplitudes of the texture patterns according to the size of the picture element size the invention makes it possible to avoid the problem, commonly called aliasing, previously referred to arising when the effects of perspective require a pattern to be generated by spatially sampling the texture stores at a rate significantly lower than the highest spacial frequency contained in the stored pattern.

In preferred forms of the invention the texture code identifies at least two textures for a given

- 3 -

0164457

picture element and an indication of t.e relative importance of each of these textures (e.g. one can be designated as a primary texture and another as a secondary texture). In such forms of the invention the picture generating system includes means for applying the different textures to the associated surface element to different extents. This possibility of mixing textures together in different proportions provides a considerable further improvement in the degree of realism obtainable.

The texture code preferably also identifies an orientation and/or scale to which the picture generating system responds by superimposing the textures on the image at chosen orientations and/or scales thereby enabling the image generator to give further realism to the image.

Finally, the texture code also preferably identifies a position of features of the texture relative to the surface element to which it is to be applied on the display. This enables continuity of texture from one surface element to another to be maintained on the displayed image.

The invention also provides an image generator comprising a data store defining characteristics of picture elements of a scene to be simulated and a picture generating system for producing a visual representation of said elements; characterised in that the picture generating system includes a texture store defining a plurality of different textures; in that the data store contains, for each picture element a texture code identifying more than one texture, and texture control data defining the manner in which they are to be applied to the picture element and in that the picture generating system is

such as to produce an image of each picture element carrying a combination of textures as defined by the texture code and texture control data for that element.

One way in which the invention may be performed will now be described by way of example with reference to the accompanying drawings in which:

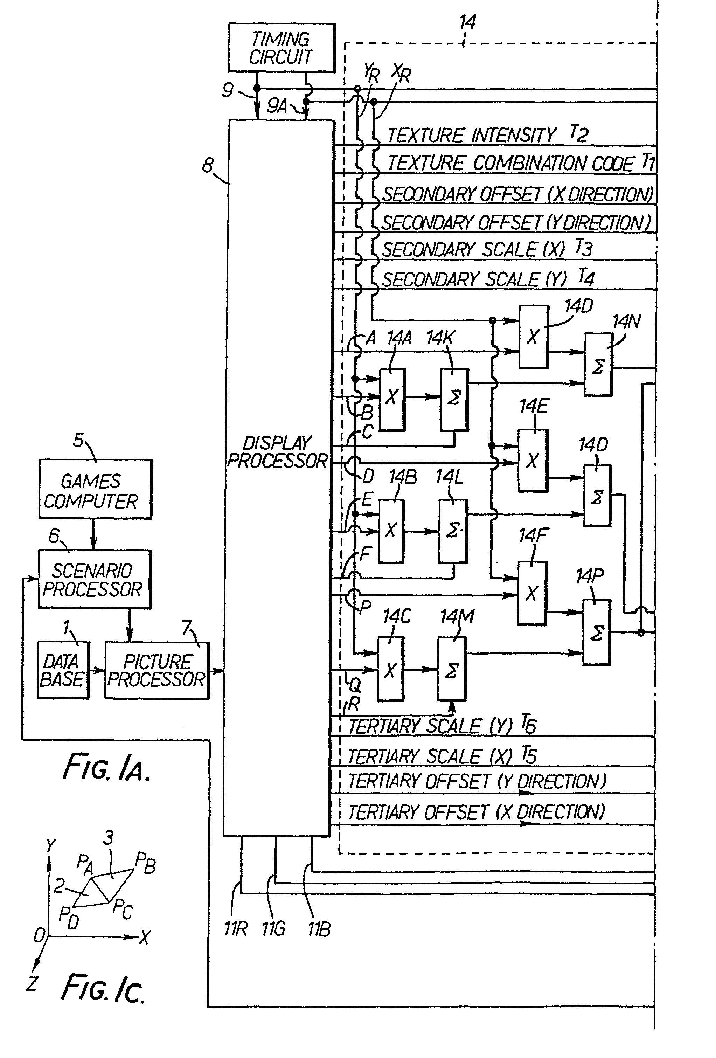

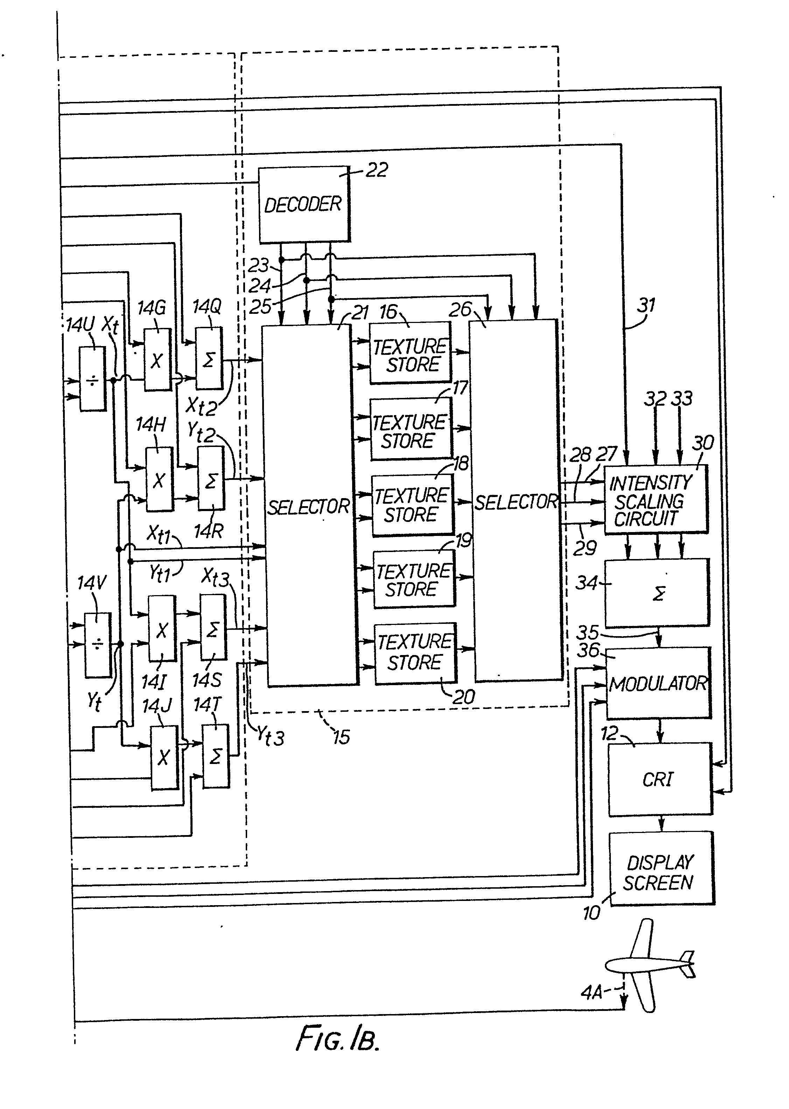

Figures 1A and 1B form, in combination, a schematic block diagram of an image generator constructed in accordance with the invention and

Figure 1C is an illustration of two triangular surface elements of a model to be simulated shown in relation to x, y and z co-ordinates and an origin O constituting a datum point for that model.

The illustrated image generator is designed for training an aircraft pilot or ship's captain by the production of moving colour pictures simulating a scene such as would be observed from a real aircraft or ship. The simulated scene depicts features which are determined to some extent by the manner in which the trainee manipulates control members simulating those in a real aircraft or ship; and to some extent by a pre-set program.

Referring to Figures 1A and 1B a data base 1 comprises a digital store of information defining imaginary three dimensional models to be depicted. Each model is considered to be formed by a number of contiguous triangular picture surface elements. Figure 1A shows one such model consisting of a tetrahedron defined by vertex points $P_A, P_B, P_C$ and $P_D$. Two surface elements 2 and 3 of this model are visible on Fig. 1A. The data base 1 contains two lists of information which will be termed a "points list" and a "faces list". The points list identifies each vertex with a code number $P_A, P_B, P_C$ etc., and gives the co-ordinates in three dimensions for each vertex as follows relative to arbitarily chosen orthoginal co-ordinates x, y and z centred at an origin
O for the particular model.

$$P_A: \quad x_A, \ y_A, \ z_A$$

$$P_B: \quad x_A, \ y_B, \ z_B$$

$$P_C: \quad x_C, \ y_C, \ z_C$$

$$P_D: \quad x_D, \ y_D, \ z_D$$

It will be appreciated that in practice there may
be a vast number of points listed in order to define a
single model and the tetrahedron having the four vertex
points listed above is given just as an example for the
purpose of illustrating how the invention works.

The faces list identifies each triangular face
with a code number e.g., face 2, face 3, etc., and for
each face lists the identities of its vertices in a
clockwise direction as viewed from outside the model.
The faces list also defines the basic colour of the face
by listing three numbers representating the intensity of
green, red and blue components. Finally, the faces
list defines the texture of the face which is defined
by the following texture code numbers.

$T_1$. This is a texture combination code defining a
combination, in order of priority, of three
standard textures to be applied to the face.
These standard textures are selected from
those available from stores 16-20 which will
be described later.

$T_2$. A code defining the overall intensity of the
texture.

$T_3$, $T_4$. These are codes defining the scale in the
x and y direction of the primary texture.

$T_5$, $T_6$. These are codes defining the scale in the
x direction and the scale in the y direction
of the secondary and tertiary textures (which
both have the same scale).

$T_7$, $T_8$. These are codes defining the offset in the x and y direction of secondary and tertiary textures relative to the primary texture.

$T_9$. This is a code defining the amplitude, as a proportion of $T_2$, for the secondary texture.

$T_{10}$. This is a code defining the amplitude, as a proportion of $T_2$, for the tertiary texture.

$T_{11}$-$T_{19}$. These nine numbers define a rotation

$$\text{matrix} = \begin{bmatrix} T_{11} & T_{12} & T_{13} \\ T_{14} & T_{15} & T_{16} \\ T_{17} & T_{18} & T_{19} \end{bmatrix}$$ which represents the

rotation of the face required (a) about its centroid to cause it to be parallel with the x,y plane and (b) about the z axis to orientate the face correctly relative to a "texture plane" which is the plane z=0 of the model, see F ig. 1A.

$T_{20}$, $T_{21}$ and $T_{22}$. These are three numbers defining the x, y and z co-ordinates of the end point of a translation vector which translates the centroid of the face to the centre of the aforementioned "texture plane", i.e. to the origin of Figure 1C.

The trainee is located in a real or imaginary vehicle 4 where he operates real controls to provide signals on line 4A. A "games computer" 5 is programmed with rules determining the way in which the trainee and various models defined in the data base 1 may be allowed to move. Information from the games computer 5 and from the line 4A is processed by what will be termed "a scenario processor" 6 to produce signals representating the observer's (i.e., the trainee's) current viewpoint and orientation and the position of each model datum point and the orientation of the x, y and z co-ordinates of each model relative to different x, y and z co-ordinates of a playing area within which all the models and the observer are located. All this data from the scenario processor 6 together with data from the data base 1 is processed in what will be called a "picture processor" 7 which determines which of the triangular surface elements defined in the data base are to be displayed at a given time, and performs a mathematical projection process on the co-ordinates $x_r$, $y_r$, $z_r$ of each vertex point so as to project that point onto an imaginary "display plane". This display plane corresponds to a display screen 10 immediately in front of the observer at 4 and is perpendicular to the observer's direction of view. This projection process calculates the points of intersection of the display plane by lines joining each vertex to the current observer position. The output from the picture processor thus consists of a points list and faces list like that in the data base but relating, at any one time, only to the surface elements to be displayed at that time and with the three dimensional co-ordinates of each surface element in the points list replaced by two dimensional projected co-ordinates relative to a display plane.

The picture processor 7 also calculates for each raster frame of a cathode ray tube display system to be described later, and for each model a set of nine constants A,B,C,D,E,F,P,Q and R as follows.

$$A = (t_1 \, r_{31} - t_3 \, r_{11})$$
$$B = (t_1 \, r_{32} - t_3 \, r_{12})$$
$$C = (t_1 \, r_{33} - t_3 \, r_{13})$$
$$D = (t_2 \, r_{31} - t_3 \, r_{21})$$
$$E = (t_2 \, r_{32} - t_3 \, r_{22})$$
$$F = (r_2 \, r_{33} - t_3 \, r_{23})$$
$$P = r_{31}$$

$$Q = r_{32}$$
$$R = r_{33}$$

where $\begin{bmatrix} r_{11} & r_{12} & r_{13} \\ r_{21} & r_{22} & r_{23} \\ r_{31} & r_{32} & r_{33} \end{bmatrix}$ is an overall rotation matrix

$\begin{bmatrix} R^1 \end{bmatrix}$ derived by rotating the axes defining the image plane to coincide with the axes of the polygon mapped into the texture plane and $t_1$ to $t_3$ are the elements of a translation vector $\begin{bmatrix} T^1 \end{bmatrix}$ required to move a polygonal face from its position in the exercise area to a position in the texture plane.

The matrix $\begin{bmatrix} R^1 \end{bmatrix} = \begin{bmatrix} R_o \end{bmatrix}\begin{bmatrix} R \end{bmatrix}^{-1}$ where $\begin{bmatrix} R_o \end{bmatrix}$ is a rotation matrix to rotate a polygonal face contained in the reference model to be parallel with the texture plane and $\begin{bmatrix} R \end{bmatrix}^{-1}$ is the inverse of the rotation matrix used to rotate the faces of a model so that they are correctly oriented relative to the image plane.

The translation vector $\begin{bmatrix} T^1 \end{bmatrix} = \begin{bmatrix} T_o \end{bmatrix} - \begin{bmatrix} S_o \end{bmatrix}\begin{bmatrix} R^1 \end{bmatrix}\begin{bmatrix} T \end{bmatrix}$ where $\begin{bmatrix} T_o \end{bmatrix}$ is the translation vector required to move a polygonal face from the reference model into the texture plane; $\begin{bmatrix} T \end{bmatrix}$ is the translation vector required to move a reference model to its position in the exercise area; $\begin{bmatrix} S_o \end{bmatrix} = S_o \begin{bmatrix} U \end{bmatrix}$ ; $S_o$ is a scaling factor computed to scale the overall texture size during data base generation; and $\begin{bmatrix} U \end{bmatrix}$ is a unit matrix.

The output from the picture processor 7 is received by what will be termed a "display processor" 8 together with signals on lines 9,9A representing the current co-ordinates $x_r$ and $y_r$, of a raster spot on a display screen 10. The display processor 8 determines which face is to be shown for a given $x_r, y_r$ position and, from the colour data for that face generates a basic red, green and blue video signal which it applies to lines 11R, 11G and 11B respectively. These basic video signals define brightness values for the three colours of a projection cathode ray tube 12 arranged to illuminate the display screen. Texture codes $T_1$ to $T_{10}$ referred to above of a surface element currently to be displayed are fed with the constants A,B,C,D,E,F, P,Q and R for the current frame, to a texture processor 14 which also receives the co-ordinates $x_r$, $y_r$ of the raster spot. The texture processor 14 uses multiplying circuits 14A to 14F, addition circuits 14K to 14P and division circuits 14U and 14V to generate co-ordinates $x_t$,$y_t$ in the texture plane in accordance with the following equations.

$$X_t = (AX_r + By_r + CZ_r)/(PX_r + Qy_r + RZ_r)$$

$$Y_t = (DX_r + Ey_r + FZ_r)/(PX_r + Qy_r + RZ_r)$$

The values $x_t$ $y_t$ are then transformed using multiplying circuits 14G,14H,14I,14J and summing circuits 14Q,14R,14S,14T in accordance with the scaling and offset values $T_3,T_4,T_5,T_6,T_7,T_8$. The result of this is to give new co-ordinates $Xt_1$ $Yt_2$ for the secondary texture and $Xt_3$ $Yt_3$ for the tertiary texture. In this particularly embodiment of the invention the scales and offsets for the secondary and tertiary textures are the same so that $Xt_2 = Xt_3$ and $Yt_2 = Yt_3$. In alternative embodiments separate scales and offsets could be used for each texture.

The co-ordinates $Xt_1$ $Yt_1$; $Xt_2$ $Yt_2$; $Xt_3$ $Yt_3$ are used to read values from an appropriate store within a texture generator 15.

The primary secondary and tertiary co-ordinates are fed to three respective texture pattern stores, e.g., as shown at 16,17,18,19 and 20, by a selector 21 which is controlled by signals from a decoder 22. The decoder 22 receives the current texture combination code from the texture processor and decodes it to produce three separate codes on lines 23,24 and 25 identifying which of the texture stores are to be selected for respective primary, secondary and tertiary textures. For the purpose of explanation it will be assumed that texture stores 16, 17 and 18 are chosen respectively for the primary, secondary and tertiary textures and all three sets of texture co-ordinate values $x_t, y_t$ thus read amplitude values from the respective three stores 16,17 and 18. Each texture store is a matrix or other collection of store locations addressed by the x and y co-ordinates and containing an amplitude value at each address. The texture co-ordinates fed to each store will scan a part of the store as the raster scans across a surface element on the screen. However, whilst the scanning of the given element on the screen will normally be at a constant rate and at a fixed y position the scanning of the texture store may be at a varying rate and through different x and y values as defined by the operation defined in the texture scan processor 14. This enables the texture to be applied to the display with exactly the desired orientation, scale and perspective required to give a desired three dimensional effect.

A second selector 26, controlled like the selector 21 by signals on lines 23,24 and 25 feeds the primary, secondary and tertiary amplitude values on lines 27,28 and 29 respectively to a summing circuit 34 and two multiplying circuits 30A and 30B which later circuits attenuate each of the second and third amplitude values by an amount determined by the secondary and tertiary attenuating signals received on lines 32 and 33, before feeding them to the summing circuit 34. The signal on line 31 is the texture intensity code $T_2$ and is used to attenuate the output of the summing circuit 34 thereby producing a final combined texture signal on line 35.

This is used in a modulator 36 to modulate the basic video signals on lines 11R, 11G and 11B before feeding them to the projection cathode ray tube 12 which illuminates the display screen 10 positioned in front of the observer at 4.

Whilst, in the illustrated embodiment of the invention the same modulating signal is applied to each colour, it is possible in alternative embodiments to provide three sets of circuits 15 and subsequent amplitude scaling circuits for the three respective colours thereby giving changes in hue as well as intensity.

CLAIMS:

1. An image generator comprising a data store defining characteristics of picture elements of a scene to be simulated; a texture store defining a texture to be applied to at least some of the elements and a picture generating system for producing a visual representation of said elements; characterised in that the texture store defines a plurality of different textures; in that the data store contains, for each picture element, a texture code identifying at least one texture and in that the picture generating system is such as to provide an image of each picture element carrying a texture or textures as defined by the texture code for that surface.

2. An image generator according to claim 1 in which the said texture code identifies a primary texture and a secondary texture and wherein the picture generating system includes means for controlling the extent to which a texture is imposed on the image such that the primary texture is more evident than the secondary texture.

3. An image generator according to claim 1 or 2 in which the said texture code identifies an orientation and in which the picture generating system responds to the texture code by imposing the or each texture on the image at an orientation dependent on the said code.

4. An image generator according to any preceding claim in which the said texture code identifies a scale and in which the picture generating system is adapted to respond to the texture code by imposing the or each texture on the image at a scale dependent on the said code.

5. An image generator according to any preceding claim in which the said texture code identifies a position and in which the picture generating system responds to the texture code by imposing the or each texture on the image of a surface at a position relative to the surface defined by the texture code.

6. An image generator comprisng a data store defining characteristics of picture elements of a scene to be simulated and a picture generating system for producing a visual representation of said elements with the said combination of textures superimposed on them; characterised in that the picture generating system includes a texture store defining a plurality of different textures; in that the data store contains, for each picture element, a texture code identifying more than one texture, and texture control data defining the manner in which they are to be applied to the picture element and in that the picture generating system is such as to produce an image of each picture element carrying a combination of textures as defined by the texture code and texture control data for that element.

7. An image generator according to claim 6 in which the texture control data includes a definition of the relative amplitudes of each texture identified.

8. An image generator according to claim 6 or 7 in which the texture control data includes a definition of the scales of each texture identified.

9. An image generator according to claim 1 and substantially as described with reference to the accompanying drawings.

*FIG. 1A.*

*FIG. 1C.*

FIG. IB.

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| X | EP-A-0 108 674  (VIGARIE)<br>* Page 6, lines 22-25; page 7, lines 11-27; page 10, lines 11-30; page 13, lines 15-22; page 22, lines 7-13 *<br><br>--- | 1,4-6 | G 06 F  15/72 |
| X | LE NOUVEL AUTOMATISME, vol. 27, no. 30, May 1982, pages 42-47, Paris, FR; F. MARTINEZ et al.: "Helios: terminal vidéo-interactif par la synthèse d'images réalistes<br>* Whole document *<br><br>--- | 1,3-6 | |
| X | COMPUTER GRAPHICS AND IMAGE PROCESSING, vol. 5, no. 2, June 1976, pages 190-202, Academic Press, Inc., New York, US; S.W. ZUCKER: "Toward a model of texture"<br>* Whole document *<br><br>----- | 1,3-6 | TECHNICAL FIELDS SEARCHED (Int. Cl 4)<br><br>G 06 F  15/72 |

The present search report has been drawn up for all claims

| Place of search | Date of completion of the search | Examiner |
|---|---|---|
| THE HAGUE | 27-02-1985 | BURGAUD C. |